# EUROPÄISCHE PATENTANMELDUNG

(11) **EP 2 163 418 A1**
(43) Veröffentlichungstag der Anmeldung: **17.03.2010**
(21) Anmeldenummer: 09005183.0
(22) Anmeldetag: 08.04.2009
(51) Int. Cl.: B60K 17/10, B60K 17/22, F16H 39/02

(54) **Umrüstung des Antriebes von LKW, Sonderfahrzeugen, wie z.B. Kehrmaschinen, für Schnell- und Langsamfahrt**

(30) Priorität: 10.09.2008 DE 202008012374 U; 25.02.2009 DE 102009010353
(71) Anmelder: Schörling Rail Tech GmbH, 31319 Sehnde (DE)
(72) Erfinder: Brock, Albert, 30989 Gehrden (DE)

(57) **Zusammenfassung**

Die Erfindung betrifft eine Umrüstung des Antriebes von LKW, Sonderfahrzeugen, wie z. B. Kehrmaschinen, für Schnell- und Langsamfahrt, wobei ein hydrostatischer Fahrantrieb ohne bauliche und konstruktive Veränderungen im Bereich der Kardanwelle eingebaut wird.

## Beschreibung

Die Erfindung betrifft die Umrüstung des Antriebes von LKW, Sonderfahrzeugen, wie z. B. Kehrmaschinen, für Schnell- und Langsamfahrt.

In der Literatur sind bereits mehrere LKW bzw. Fahrgestelle mit hydraulischem Antrieb beschrieben worden. So wird bei einer bekannten Lösung der Spezialaufbau des Sonderfahrzeuges mit dem Sonderantriebssystem auf ein serienmäßiges LKW-Fahrgestell montiert, wobei das übliche Wechselgetriebe lediglich auf den Transportcharakter des LKW abgestimmt ist. Anstelle dieses Getriebes kann ein Wechselgetriebe nachgeschaltet werden, welches über 3 Hauptschaltstellungen verfügt. Dieses Spezialgetriebe weist 2 unabhängig voneinander wirkende Zahnradstränge auf. Der 2. Zahnradstrang bildet bei Bedarf eine Verbindung zwischen Hydraulikmotor und Achsantrieb. Es wird demnach auf einem LKW-Fahrgestell anstelle des üblichen Wechselgetriebes ein Spezialgetriebe angeordnet. Hierbei ist die Eingangswelle des Spezialgetriebes über eine Gelenkwelle mit dem Fahrgestellmotor verbunden. Vom Hauptabtriebsflansch des Spezialgetriebes erfolgt über eine weitere Gelenkwelle der Antrieb der Hinterachse des Fahrzeugs in üblicher Weise. Bei diesen Lösungsvorschlägen muss demnach das System beim Bau des Fahrzeuges gezielt vorgesehen und installiert werden. Eine alternative Nachinstallation ist hier nicht empfehlenswert.

Bei einer anderen in der Literatur beschriebenen Lösung wird, bei dem darin als Teil der Antriebseinrichtung z. B. eines Fahrzeug dienenden stufenlosen hydrostatisch-mechanischen Leistungsverzweigungsgetriebe ist, in dessen Planetendifferenzial das kleine Sonnenrad räumlich zwischen einem großen Sonnenrad und einem Antriebsmotor angeordnet ist. Bedingt durch diese Lösung muss die das kleine Sonnenrad tragende nicht antriebseitige Welle als Hohlwelle ausgebildet und koaxial zu der das große Sonnenrad tragenden antriebseitigen Welle diese umgebend angeordnet sein, wobei solchen Planetendifferenzialen für deren Größe grundsätzlich das kleine Sonnenrad maßgebend ist, ergibt sich zwangsläufig aufgrund vorgenannter Ausgestaltung und Anordnung der beiden Sonnenräder und deren Wellen die Gesamtgröße des Leistungsverzweigungsgetriebes. Je nach Leistungsbedarf treten daher bei der praktischen Realisierung Probleme hinsichtlich der Unterbringung der Antriebseinrichtung im Fahrzeug auf, insbesondere dann, wenn auch noch ein Energiespeicher-Schwungrad als Teil einer Bremsenergierückgewinnungseinrichtung vorgesehen wurde.

Auch diese von ihrer konstruktiven Struktur her sehr komplexe Lösung tangiert den Erfindungsgedanken auch nicht andeutungsweise.

Im bekannten Stand der Technik wird bei vergleichbaren Lösungen z. B. der Hauptfahrantrieb unterbrochen und ein Zusatzgetriebe eingesetzt. Hierzu werden große Drehmomente benötigt, da hierbei Fahrgeschwindigkeiten bis zu 90 km/h möglich sind.

Der Erfindung liegt daher die Aufgabe zugrunde, eine preisgünstige und schnelle Umrüstung von LKW und Sonderfahrzeugen von Normalfahrt auf Langsamfahrt und umgekehrt zu ermöglichen bei Minimierung der Umbaukosten, Reduzierung der Umbauzeit und Benutzung und Einsatz der im Fahrzeug bereits vorhandenen Kardanwelle.

Diese Aufgabe wird erfindungsgemäß dadurch gelöst, dass im Neu- oder Nachrüstverfahren des Fahrzeugs ein hydrostatischer Fahrantrieb ohne bauliche und konstruktive Veränderungen im Bereich der Kardanwelle implementiert wird.

Bei der bevorzugten erfindungsgemäßen Lösung wird ein Zwischengetriebe eingebaut, wobei die Original-Kardanwelle im Fahrzeug belassen wird und für die Auf- oder Nachrüstung durch das einzubauende Zwischengetriebe der bei der Original-Kardanwelle konstruktiv vorgegebene Verschiebeweg ausgenutzt wird.

Weitere erfindungsgemäße Lösungsvarianten und Ausformungen können den Unteransprüchen entnommen werden.

Einige der erfindungsgemäßen Lösungen sind in den Zeichnungen dargestellt Es zeigen:

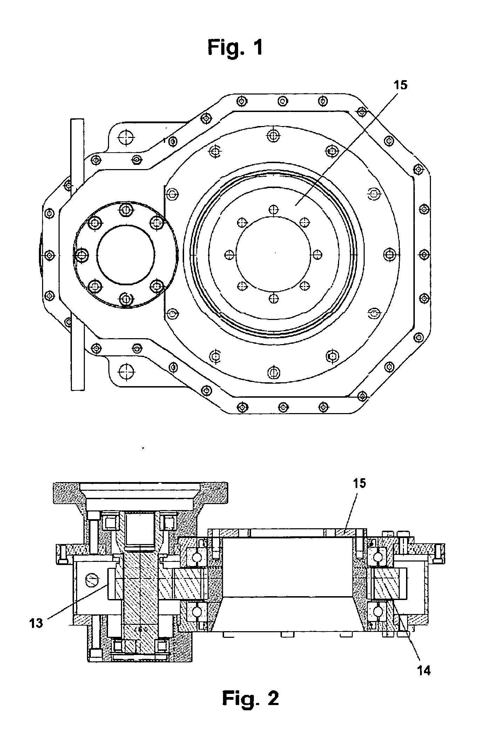

- Fig. 1:: Vorderansicht des Zwischengetriebes mit dem Flansch (15).
- Fig. 2:: Seitenansicht des Zwischengetriebes im Schnitt mit oberem Zahnrad 1 (13) und unterem Zahnrad 2 (14) sowie Flansch (15).

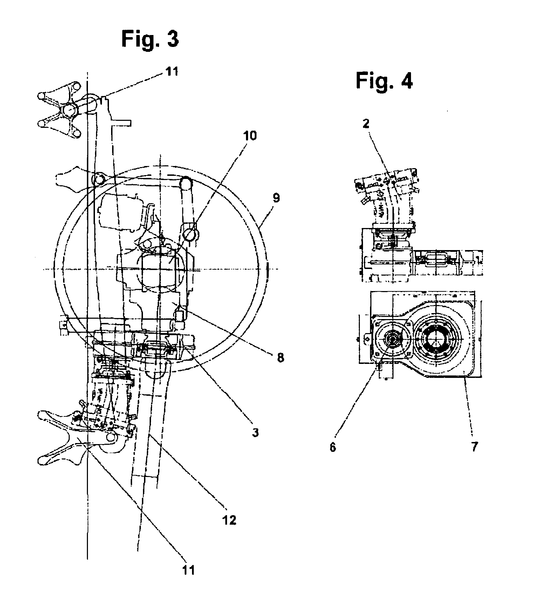

- Fig. 3:: Seitenansicht des Rad-Kardanwellen-Zwischengetriebebereiches mit Federbock (11), Kardanwelle (12), Zwischengetriebe (3), Differenzial der LKW-Hinterachse (8), Reifen (9) und LKW-Hinterachse (10).
- Fig. 4:: Seitenansicht und Vorderansicht des Zwischengetriebes mit Motoranbauflansch (6), dem Getriebegehäuses des Zwischengetriebes (7) sowie dem am Getriebe angeflanschten Hydraulikmotor (2).

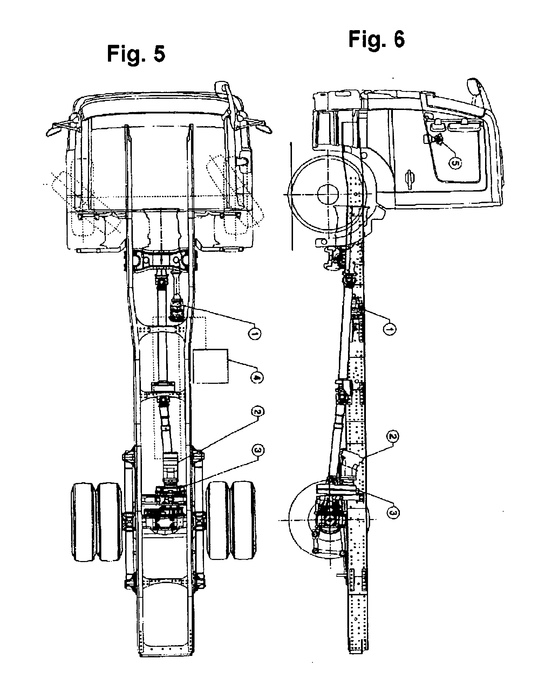

- Fig. 5:: Draufsicht auf den umgerüsteten LKW bzw. LKW-Fahrgestell mit der über Nebenabtrieb zuschaltbare hydraulische Regelpumpe (1), dem dafür in Funktion befindlichen Hydrauliktank (4), dem am Getriebe angeflanschten Hydraulikmotor (2) sowie dem Zwischengetriebe (3).
- Fig. 6:: Seitenansicht der unter Fig. 5 dargestellten Draufsicht, wiederum mit der zuschaltbaren Hydraulikregelpumpe (1), dem am Zwischengetriebe angeflanschten Hydraulikmotor (2), dem für die Steuerung vorgesehenen Joystick (5) sowie dem Zwischengetriebe (3).

### Bezugszeichenliste:

- 1): über Nebenabtrieb zuschaltbare hydraulische Regelpumpe
- 2): Hydraulikmotor am Getriebe geflanscht
- 3): Zwischengetriebe
- 4): Hydrauliktank
- 5): Joystick
- 6): Motoranbauflansch
- 7): Getriebegehäuse
- 8): Differential der LKW-Hinterachse
- 9): Reifen
- 10): LKW-Hinterachse
- 11): Federbock
- 12): Kardanwelle
- 13): Zahnrad 1
- 14): Zahnrad 2
- 15): Flansch

## Patentansprüche

1. Umrüstung des Antriebes von LKW, Sonderfahrzeugen, wie z. B. Kehrmaschinen, für Schnell- und Langsamfahrt,
**dadurch gekennzeichnet,**
**dass** im Neu- oder Nachrüstverfahren des Fahrzeuges ein hydrostatischer Fahrantrieb ohne bauliche und konstruktive Veränderungen im Bereich der Kardanwelle eingebaut wird.

2. Umrüstung des Antriebes von LKW, Sonderfahrzeugen, wie z. B. Kehrmaschinen, für Schnell- und Langsamfahrt, nach Anspruch 1,
**dadurch gekennzeichnet,**
**dass** ein Zwischengetriebe (3) eingebaut wird.

3. Umrüstung des Antriebes von LKW, Sonderfahrzeugen, wie z. B. Kehrmaschinen, für Schnell- und Langsamfahrt, nach den Ansprüchen 1 und 2,
**dadurch gekennzeichnet,**
**dass** die Original-Kardanwelle (12) im Fahrzeug belassen und für die Auf- oder Nachrüstung nicht ausgetauscht wird.

4. Umrüstung des Antriebes von LKW, Sonderfahrzeugen, wie z. B. Kehrmaschinen, für Schnell- und Langsamfahrt, nach einem oder mehreren der Ansprüche 1 - 3,
**dadurch gekennzeichnet,**
**dass** für den Einbau des Zwischengetriebes (3) die Original-Kardanwelle (12) beim Einbau des Zwischengetriebes (3) das konstruktiv vorgegebene Verschiebestück nutzt.

5. Umrüstung des Antriebes von LKW, Sonderfahrzeugen, wie z. B. Kehrmaschinen, für Schnell- und Langsamfahrt, nach einem oder mehreren der Ansprüche 1 - 4,
**dadurch gekennzeichnet,**
**dass** die Zahnräder 1 und 2 (13, 14) immer im Eingriff sind.

6. Umrüstung des Antriebes von LKW, Sonderfahrzeugen, wie z. B. Kehrmaschinen, für Schnell- und Langsamfahrt, nach einem oder mehreren der Ansprüche 1 - 5,
**dadurch gekennzeichnet,**
**dass** das System mittels Joystick (5) bedient wird.

7. Umrüstung des Antriebes von LKW, Sonderfahrzeugen, wie z. B. Kehrmaschinen, für Schnell- und Langsamfahrt, nach einem oder mehreren der Ansprüche 1 - 6,
**dadurch gekennzeichnet,**
**dass** der Flansch (15) eine Materialstärke von 12 - 15 mm besitzt.

8. Umrüstung des Antriebes von LKW, Sonderfahrzeugen, wie z. B. Kehrmaschinen, für Schnell- und Langsamfahrt, nach einem oder mehreren der Ansprüche 1 - 7,
**dadurch gekennzeichnet,**
**dass** der Flansch (15) mit der Basis verschraubt ist

9. Umrüstung des Antriebes von LKW, Sonderfahrzeugen, wie z. B. Kehrmaschinen, für Schnell- und Langsamfahrt, nach einem oder mehreren der Ansprüche 1 - 8,
**dadurch gekennzeichnet,**
**dass** die Verbindung der Kardanwelle (12) mit dem Differenzial durch das Zwischengetriebe (3) erfolgt.

10. Umrüstung des Antriebes von LKW, Sonderfahrzeugen, wie z. B. Kehrmaschinen, für Schnell- und Langsamfahrt, nach einem oder mehreren der Ansprüche 1 - 9,
**dadurch gekennzeichnet,**
**dass** die Kardanwelle (12) auf dem Flansch (15) mit Außenverzahnung mündet

11. Umrüstung des Antriebes von LKW, Sonderfahrzeugen, wie z. B. Kehrmaschinen, für Schnell- und Langsamfahrt, nach einem oder mehreren der Ansprüche 1 - 10,
**dadurch gekennzeichnet,**
**dass** im Bereich des Auftreffpunktes der Kardanwelle (12) 3 Scheiben bzw. Flansche aufeinanderstoßen. Die Scheibe der Kardanwelle (12), Flansch (15), sowie der Differenzialflansch.

12. Umrüstung des Antriebes von LKW, Sonderfahrzeugen, wie z. B. Kehrmaschinen, für Schnell- und Langsamfahrt, nach einem oder mehreren der Ansprüche 1 - 11,
**dadurch gekennzeichnet,**
**dass** im oberen Bereich des Zwischengetriebes (3) der Anschluss an das Hydraulikelement (2) konzipiert ist.

13. Umrüstung des Antriebes von LKW, Sonderfahrzeugen, wie z. B. Kehrmaschinen, für Schnell- und Langsamfahrt, nach einem oder mehreren der Ansprüche 1 - 12,
**dadurch gekennzeichnet,**
**dass** der hydraulisch basierte Antriebsbereich zwischen 0 und 15 km/h konzipiert ist.

14. Umrüstung des Antriebes von LKW, Sonderfahrzeugen, wie z. B. Kehrmaschinen, für Schnell- und Langsamfahrt, nach einem oder mehreren der Ansprüche 1 - 13,
**dadurch gekennzeichnet,**
**dass** der Schaltvorgang für das Zwischengetriebe (3) per Luft- oder Stellmotor erfolgt.

15. Umrüstung des Antriebes von LKW, Sonderfahrzeugen, wie z. B. Kehrmaschinen, für Schnell- und Langsamfahrt, nach einem oder mehreren der Ansprüche 1 - 14,
**dadurch gekennzeichnet,**
**dass** der Hydraulikmotor (2) je nach Fahr- und Belastungssituation an- oder zugeschaltet werden kann.
